(19) Europäisches Patentamt

European Patent Office

Office européen des brevets

(11) **EP 0 878 702 B1**

(12) **EUROPÄISCHE PATENTSCHRIFT**

(45) Veröffentlichungstag und Bekanntmachung des Hinweises auf die Patenterteilung:
**03.03.2004 Patentblatt 2004/10**

(51) Int Cl.[7]: **G01N 21/21**, G01L 1/24, G01N 21/47

(21) Anmeldenummer: **98108312.4**

(22) Anmeldetag: **07.05.1998**

(54) **Verfahren und Vorrichtung zur Messung von Spannungen in Glasscheiben mit Hilfe von Streulicht**

Method and device for measuring stresses in sheet glass by scattered light

Méthode et appareil pour déterminer des contraintes dans des panneaux de verre avec de la lumière diffusée

(84) Benannte Vertragsstaaten:
**AT BE CH DE ES FI FR GB IE IT LI LU NL PT SE**

(30) Priorität: **15.05.1997 DE 19720330**

(43) Veröffentlichungstag der Anmeldung:
**18.11.1998 Patentblatt 1998/47**

(73) Patentinhaber: **SAINT GOBAIN GLASS FRANCE**
**92400 Courbevoie (FR)**

(72) Erfinder: **Offermann, Volkmar, Dr.**
**52134 Herzogenrath (DE)**

(74) Vertreter: **Dederichs, August et al**
**Saint-Gobain,**
**Patentabteilung,**
**Viktoriaallee 3-5**
**52066 Aachen (DE)**

(56) Entgegenhaltungen:
**EP-A- 0 104 151**     **EP-A- 0 152 834**
**DE-A- 1 473 380**     **US-A- 3 811 775**

**Beschreibung**

Die Erfindung betrifft ein Verfahren zum Messen von Spannungen über die Dicke einer Glasscheibe nach dem Streulichtverfahren, bei dem ein seine Polarisation periodisch zwischen linear und zirkular änderndes monochromatisches Lichtstrahlenbündel schräg in die Glasscheibe eingestrahlt und das innerhalb der Glasscheibe auf dem Weg des Lichtstrahlenbündels entstehende Streulicht mit einer Videokamera erfaßt und mit Hilfe der digitalen Bildverarbeitung Größe und Vorzeichen der Spannungen auf dem Weg des Lichtstrahlenbündels gleichzeitig ermittelt werden. Die Erfindung betrifft ferner eine Vorrichtung zur Durchführung des Verfahrens.

Die bekannten Verfahren dieser Art benutzten die Tatsache, daß Spannungen in transparenten Körpern mit Hilfe des photoelastischen Effekts sichtbar gemacht werden können. Danach ist die Intensität des ausgesendeten Streulichts entlang des Weges des einfallenden polarisierten Lichtstrahlenbündels abhängig vom Zustand seiner Polarisation und von den Spannungen im Glas. Da es in der Praxis schwierig ist, die Intensität des Streulichtes direkt zu messen, wird üblicherweise die Polarisation des einfallenden Lichtstrahlenbündels periodisch verändert, um dann die Intensitätsänderungen des Streulichts durch die Phasenverschiebung als Funktion der Zeit an zwei Orten aufzunehmen und damit die Spannungen in dem Wegintervall zu bestimmen.

Ein Verfahren der eingangs genannten Art und eine Vorrichtung zu seiner Durchführung sind in der EP 0 152 834 A1 beschrieben. Bei diesem Verfahren wird ein linienförmiger, auf etwa 1 mm Durchmesser gebündelter Laserlichtstrahl schräg in die zu messende Glasscheibe eingestrahlt. Wenn mit diesem Verfahren das Spannungsprofil über die Dicke der Glasscheibe entlang einer senkrecht zur Glasoberfläche ausgerichteten Linie ermittelt werden soll, muß ein aufwendiges punktweises Abtastverfahren durchgeführt werden, und zwar durch Parallelverschiebung des Lichtstrahls oder der Glasscheibe. Dieses Verfahren ist daher verhältnismäßig zeitaufwendig.

Der Erfindung liegt die Aufgabe zugrunde, das bekannte Verfahren dahingehend weiterzuentwickeln, daß die Bestimmung der Spannungen nach Größe und Vorzeichen über die Dicke einer Glasscheibe entlang einer senkrecht zur Glasoberfläche verlaufenden Linie vereinfacht wird.

Erfindungsgemäß wird diese Aufgabe dadurch gelöst, daß ein im Querschnitt schmales Lichtstrahlenbündel mit einer solchen Höhe verwendet wird, daß das Streulicht wenigstens entlang einer senkrecht zur Glasoberfläche verlaufenden Meßlinie wenigstens über einen wesentlichen Teil der Dicke der Glasscheibe zur Ermittlung der Spannungen gleichzeitig erfaßt wird.

Zur Durchführung des erfindungsgemäßen Verfahrens wird also ein monochromatisches Lichtstrahlenbündel verwendet, das im Querschnitt gesehen im Meßbereich der Glasscheibe eine im Vergleich zu seiner Breite große Höhe besitzt. Diese Höhe muß mindestens so groß sein, daß der gesamte Meßbereich, der eine Meßlinie senkrecht zur Glasoberfläche wenigstens über einen wesentlichen Teil der Dicke der Glasscheibe umfaßt, gleichzeitig durchstrahlt wird. Die Breite des Lichtstrahlenbündels soll möglichst gering sein, damit nur die Spannungen in der gewählten Meßebene erfaßt werden.

Mit besonderem Vorteil wird das Verfahren so durchgeführt, daß das Lichtstrahlenbündel die Glasscheibe wenigstens entlang einer senkrecht zur Glasoberfläche ausgerichteten Linie über ihre gesamte Dicke durchstrahlt, so daß von der Videokamera das Streulicht über die gesamte Dicke der Glasscheibe gleichzeitig erfaßt wird.

Vorteilhafterweise wird das schmale Lichtstrahlenbündel mit Hilfe einer Fokussiereinrichtung erzeugt, die aus mindestens einer Sammellinse zur Fokussierung des Lichtstrahlenbündels und zwei Zylinderlinsen mit senkrecht aufeinander stehenden Achsen besteht. Die erste Zylinderlinse erzeugt ein nahezu paralleles Lichtstrahlenbündel in der Meßebene mit einer solchen Höhe, daß die Glasscheibe im Meßbereich entlang einer senkrecht zur Glasoberfläche verlaufenden Meßlinie wenigstens über einen wesentlichen Teil ihrer Dicke durchstrahlt wird. Die zweite Zylinderlinse dient zur Erzeugung eines Fokus senkrecht zur Meßebene, so daß eine Brennlinie entsteht. Die optischen Daten der verwendeten Linsen werden so gewählt, daß in der Ebene senkrecht zur Meßebene das konvergierende Lichtstrahlenbündel vor der Brennlinie und das divergierende Lichtstrahlenbündel hinter der Brennlinie in einem möglichst engen Fenster liegen.

Wenn beispielsweise die in der Ebene der Glasscheibe liegenden Spannungskomponenten über die gesamte Dicke der Glasscheibe senkrecht zu ihrer Oberfläche gemessen werden sollen, wird das so erzeugte Lichtstrahlenbündel mit im Vergleich zu seiner Breite großer Höhe und mit senkrecht zur Ebene der Glasscheibe ausgerichteter Hauptstrahlenebene mittels eines optisch an die Glasscheibe gekoppelten Prismas schräg in die Glasscheibe eingestrahlt. Das durch die Spannungen in der Glasscheibe hervorgerufene, sich periodisch ändernde Streulichtmuster wird unter einem Winkel von 45° zur Einfallsebene des Lichtstrahlenbündels über dasselbe Prisma, das auch zum Einleiten des Lichtstrahlenbündels in die Glasscheibe benutzt wird, mit einer Kamera beobachtet. Mit Hilfe der digitalen Bildverarbeitung wird dann der Spannungszustand über die gesamte Dicke senkrecht zur Oberfläche der Glasscheibe gleichzeitig ermittelt. Die Zeilen der Kamera sind dazu parallel zu den Lichtstrahlen der Hauptstrahlenebene des erzeugten Lichtstrahlenbündels ausgerichtet. Jedes Pixel der Kamera liefert ein intensitätsmoduliertes analoges Signal, das dann mit Hilfe eines speziellen Analog-Digital-Wandler für Videosignale digitalisiert und mit Informationen über den Ort, das heißt Zeile und Spalte der Kamera, versehen wird. Das Kamerakoordinatensystem und das Probenkoordinatensystem stehen in einem bekannten, eindeutigen Zusammenhang zueinander. Die Weiterverarbeitung des digitalisierten Signals erfolgt mit einem geeigneten Rechnerprogramm unter Verwendung einer Fourier-Transformation, so daß die Intensitätsänderung des Streulichts für jeden Punkt im beobachteten Bereich ermittelt und daraus automatisch das Spannungsprofil über die gesamte Scheibendicke berechnet wird.

Eine für die Durchführung des Verfahrens geeignete Vorrichtung umfaßt eine ein linear polarisiertes monochromatisches Lichtstrahlenbündel erzeugende Beleuchtungseinheit, einen die Polarisationsebene mit vorgegebener Rotationsgeschwindigkeit drehenden Filter, einen diesem nachgeschalteten, die Polarisation des Lichtstrahlenbündels periodisch zwischen linear und zirkular modulierenden Filter, ein das Lichtstrahlenbündel schräg in die Glasscheibe einkoppelndes Prisma, eine Videokamera und eine elektronische Auswerteeinheit für die von der Videokamera gelieferten Signale und zeichnet sich dadurch aus, daß zwischen der Beleuchtungseinheit und dem die Polarisationsebene drehenden Filter eine Einrichtung zwischengeschaltet ist, die im Meßfeld innerhalb der Glasscheibe ein im Querschnitt schmales Lichtstrahlenbündel, das eine im Vergleich zu seiner Breite große Höhe besitzt, erzeugt, daß bei dem gewählten Einstrahlwinkel die Glasscheibe wenigstens an einer Stelle entlang einer senkrecht zur Glasoberfläche verlaufenden Meßlinie über einen wesentlichen Teil ihrer Dicke durchstrahlt wird.

Ein bevorzugtes Ausführungsbeispiel für das erfindungsgemäße Verfahren und eine für seine Durchführung geeignete Vorrichtung werden im folgenden anhand der Zeichnungen näher erläutert.

Von den Zeichnungen zeigt

Fig. 1   das auszuwertende Streulicht im Meßfeld beim Stand der Technik;

Fig. 2   das auszuwertende Streulicht im Meßfeld beim erfindungsgemäßen Verfahren;

Fig. 3   eine vereinfachte Darstellung der gesamten Meßvorrichtung, und

Fig. 4   den Datenfluß als Blockschaltbild.

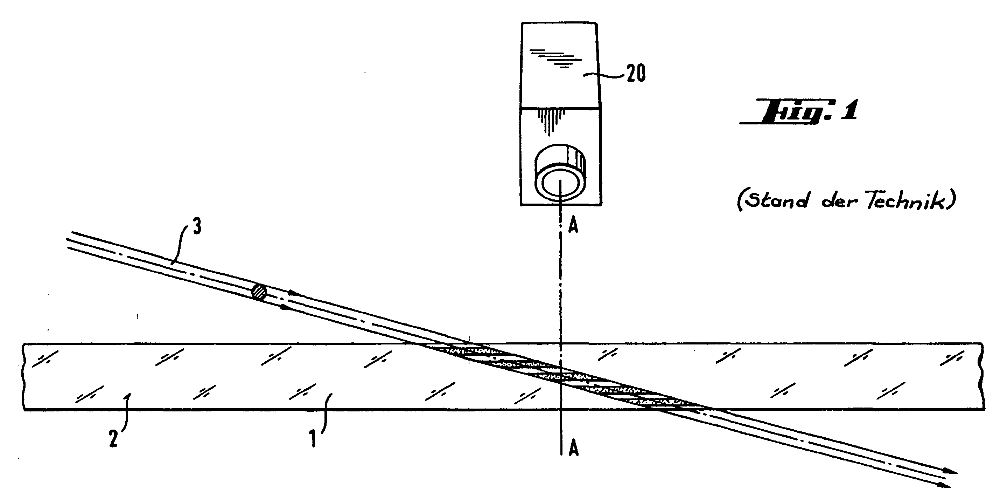

In Fig. 1 wird das Streulichtverfahren nach dem Stand der Technik veranschaulicht, wobei der Einfachheit halber die Glasscheibe 1 in einer Ansicht auf die Kantenfläche 2 dargestellt ist. In die Oberfläche der Glasscheibe 1 wird ein eng gebündeltes monochromatisches Laserstrahlenbündel 3 unter einem flachen Winkel schräg eingestrahlt. Innerhalb der Glasscheibe 1 bilden sich unter der Wirkung der mechanischen Spannungen im Glas durch Interferenz dunkle und helle Streifen. Wenn nun der Spannungszustand in der Glasscheibe entlang der Linie A-A gemessen werden soll, müssen die Messungen punktweise in verschiedenen Höhen vorgenommen werden. Zu diesem Zweck muß vor jeder Messung entweder der Laserstrahl 3 parallel zu sich selbst um ein geringes Maß verschoben werden, oder die Glasscheibe 1 muß in ihrer Ebene geringfügig verschoben werden.

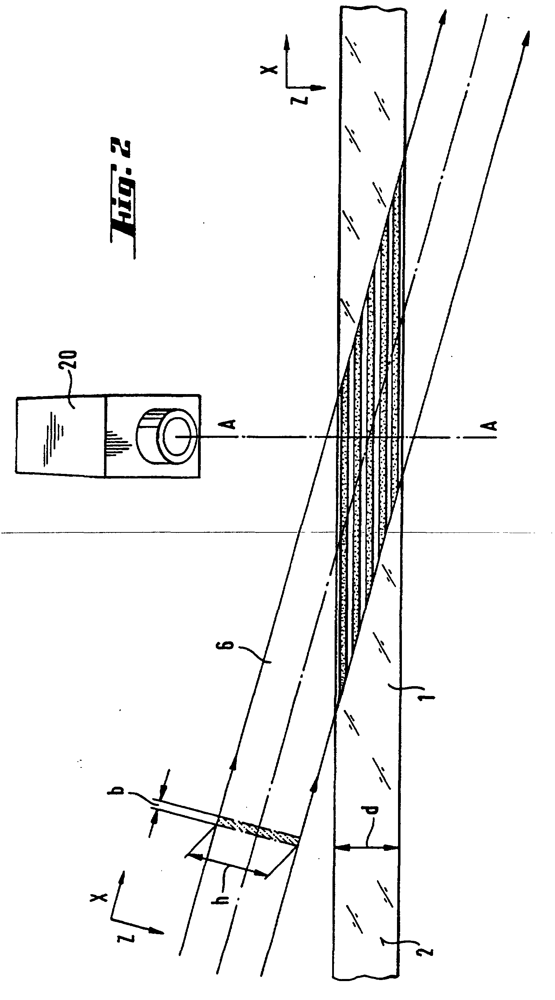

Demgegenüber ist in der Fig. 2 ein Bild des Meßfeldes mit den durch das Streulicht gebildeten Interferenzstreifen dargestellt, wie es bei der Durchführung des erfindungsgemäßen Verfahrens entsteht. Das Laserstrahlenbündel 6 hat in diesem Fall im Querschnitt eine verhältnismäßig große Höhe h, jedoch zumindest im Bereich der Linie A-A eine nur geringe Breite b. Man erkennt, daß im Bereich der senkrecht zur Glasoberfläche verlaufenden Meßlinie A-A die Interferenzstreifen sich über die gesamte Dicke der Glasscheibe 1 bilden, so daß die Auswertung entlang der Linie A-A ohne eine Verschiebung des Laserstrahlbündels oder der Glasscheibe erfolgen kann.

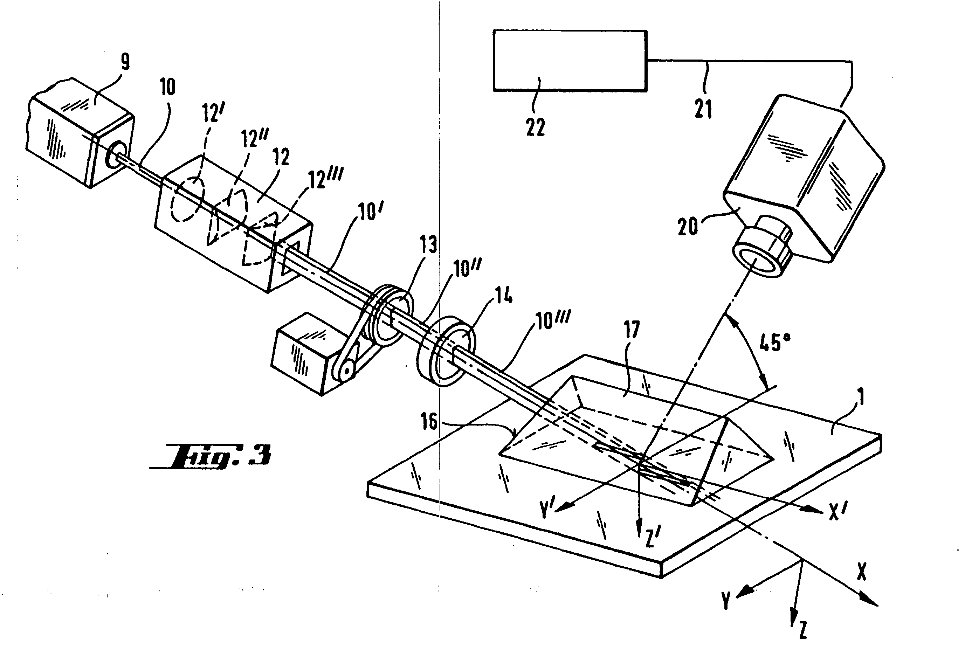

Wie die in Fig. 3 dargestellte Meßanordnung zeigt, sendet ein Argon-Ionen-Laser 9 ein monochromatisches und polarisiertes Lichtstrahlenbündel 10 mit einer Wellenlänge von $\lambda = 488$ nm entlang einer Achse x aus. Die Wellenlänge des emittierten Lichts sollte möglichst kurz sein, da die Intensität des entstehenden Streulichts umgekehrt proportional zur Wellenlänge ist.

Das Lichtstrahlenbündel 10 wird anschließend mit Hilfe der Fokussiereinrichtung 12 in die für die Durchführung des erfindungsgemäßen Meßverfahrens notwendige Form mit im Vergleich zu seiner Breite großen Höhe gebracht. Die verwendete Fokussiereinrichtung 12 besteht aus einer Sammellinse 12' mit einer Brennweite von $f_1 = 60$ mm zur Fokussierung des Lichtstrahlenbündels auf den Meßbereich und zwei Zylinderlinsen 12'' und 12''' mit senkrecht aufeinander stehenden Achsen. Die erste Zylinderlinse 12'' besitzt für Lichtstrahlen in der Meßebene (xz-Ebene) eine Brennweite von $f_2 = 80$ mm, während sie für Lichtstrahlen in der Ebene senkrecht zur Meßebene (xy-Ebene) keine fokussierende Wirkung hat. Das aus der ersten Zylinderlinse 12'' austretende Lichtstrahlenbündel besteht aus nahezu parallel verlaufenden Lichtstrahlen in der Meßebene (xz-Ebene) mit einer Höhe, die ausreicht, den gesamten Meßbereich über die Dicke der Glasscheibe gleichzeitig auszuleuchten. Die zweite Zylinderlinse 12''' dagegen hat für Lichtstrahlen in der Meßebene (xz-Ebene) keine fokussierende Wirkung, aber in der Ebene senkrecht zur Meßebene (xy-Ebene) eine Brennweite von $f_3 = 200$ mm. Das aus der zweiten Zylinderlinse 12''' austretende Lichtstrahlenbündel hat in der Ebene senkrecht zur Meßebene (xy-Ebene) auf einer Länge, die ausreicht, den gesamten Meßbereich gleichzeitig auszuleuchten, eine maximale Breite von 0,2 mm, um Meßungenauigkeiten zu vermeiden. Mit dieser erfindungsgemäßen Fokussiereinrichtung erhält man eine Höhe des Lichtstrahlenbündels von etwa 8 mm und auf einer Länge von ungefähr 20 mm eine maximale Breite von 0,2 mm.

Das aus der Fokussiereinrichtung austretende Lichtstrahlenbündel 10' mit im Vergleich zu seiner Breite großer Höhe ist bereits linear in der Meßebene (xz-Ebene) polarisiert. Es tritt durch ein λ/2-Filter 13, das um die optische Achse x rotiert. Das aus dem λ/2-Filter 13 austretende Lichtstrahlenbündel 10" ist weiterhin linear polarisiert, seine Polarisationsebene dreht sich aber in Abhängigkeit von der Rotation des λ/2-Filters 13. Anschließend durchläuft das nun modulierte linear polarisierte Lichtstrahlenbündel 10" ein λ/4-Filter 14, dessen Achsen unter 45° zur Oberfläche der Glasscheibe 1 liegen. Das austretende Lichtstrahlenbündel 10''' ändert in Abhängigkeit von der Rotation des λ/4-Filters 14 periodisch seine Polarisation von linear nach elliptisch, zirkular, elliptisch, linear und so weiter.

Das Lichtstrahlenbündel 10''' mit im Vergleich zu seiner Breite großer Höhe trifft senkrecht auf die Fläche 16 des Prismas 17, das frei von inneren Spannungen und über eine Immersionsflüssigkeit optisch an die Glasscheibe 1 angekoppelt ist. Der Winkel zwischen dem Lichtstrahlenbündel 10''' und der Glasscheibe 1 beträgt etwa 15°. Das entlang des Weges des Lichtstrahlenbündels 10''' in der Glasscheibe entstehende Streulicht wird mit einer hochempfindlichen Kamera 20, deren optische Achse senkrecht zur optischen Achse x der Lichtquelle und unter einem Winkel von 45° zur Oberfläche der Glasscheibe 1 montiert ist, über das Prisma 17 aufgenommen. Die Kamera 20 besitzt ein Makroobjektiv und liefert bereits bei 5 mlx ein volles Videosignal. Sie wird so ausgerichtet, daß ihre Zeilen parallel zur optischen Achse x liegen, so die Wegintervalle zur Berechnung der Phasendifferenz in definierten Spalten der Kamera 20 liegen. Nach Zuordnung der Begrenzungsflächen der Glasscheibe 1 zu dem Koordinatensystem der Kamera 20 kann jedem einzelnen Pixel des aufgenommenen Bildes ein analoges Signal zugeordnet werden, das Informationen über die zeitliche Intensitätsänderung und seine Lage bezüglich des Lichtstrahls 10''' und der Glasscheibe 1 beinhaltet. Die analogen Signale werden über die Datenleitung 21 an die Steuer- und Auswerteeinheit 22 weitergegeben, die auch den Analog-Digital-Wandler zur Digitalisierung der Videosignale enthält.

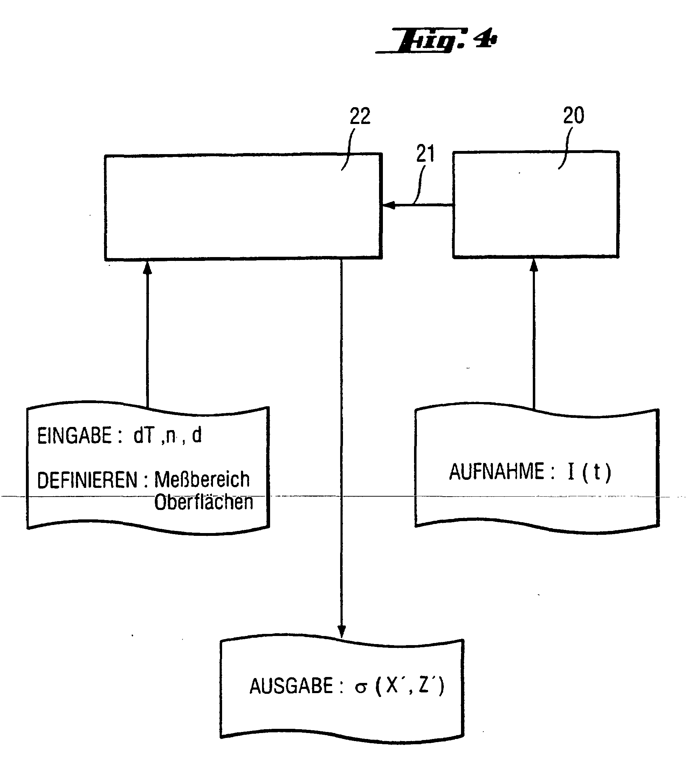

Fig. 4 zeigt den Datenfluß als Blockdiagramm. Zunächst werden das Intervall dT zwischen zwei zu erfassenden Bildern, das heißt die Triggerrate, die Gesamtzahl n der Bilder pro Umdrehung des λ/2-Filters 13 bei dem gewählten Intervall dT und die Glasdicke d eingegeben. Anschließend müssen der Meßbereich und die Oberflächen der Glasscheibe 1 definiert werden. Ein Intervall dT zwischen 1/100 s und 1/10 s bei einer Drehzahl von etwa 0,1 s$^{-1}$ des λ/2-Filters 13 hat sich als vorteilhaft für die Durchführung des erfindungsgemäßen Meßverfahrens erwiesen. Ein Intensitätsbild I(t) wird von der Kamera 20 erfaßt und über die Datenleitung 21 zu der Analog-Digital-Wandler-Stufe der Steuer- und Auswerteeinheit 22 übertragen, dort digitalisiert und in dem RAM der Steuer- und Auswerteeinheit 22 gespeichert. Solange die Gesamtzahl n der Intensitätsbilder I (t) noch nicht gespeichert ist, wird nach dem Intervall dT von der Steuer- und Auswerteeinheit 22 ein Kamerabild über die Datenleitung 21 eingelesen. Nach Speicherung der Gesamtzahl n der Intensitätsbilder I(t) stehen die Daten zur eigentlichen Spannungsberechnung zur Verfügung.

Zur Berechnung der Spannungen aus den gespeicherten Intensitätsdaten wird für jedes Pixel eine Analyse der zeitlichen Intensitätsänderung in Abhängigkeit von der Modulation des eintretenden Lichtstrahlenbündels 10''' mit Hilfe einer Fouriertransformation durchgeführt und sowohl die Amplitude A(x,z) als auch die Phase φ(x,z) der Intensität für jedes Pixel bestimmt. Die Spannungsverteilung σ(x,z) kann nach der Formel

$$\sigma(x_0, z_0) = \frac{\varphi(x_0 + \frac{\Delta x}{2}, z_0) - \varphi(x_0 - \frac{\Delta x}{2})}{360°} \cdot \frac{1}{\Delta x} \cdot \frac{\lambda}{C}$$

λ:   Wellenlänge des verwendeten Lichts
C:   spannungsoptische Konstante

berechnet werden. Der Wert für Δx muß so gewählt werden, daß ein Phasenunterschied an den benachbarten Orten noch meßbar ist, sollte andererseits aber möglichst klein sein, um die Genauigkeit der ermittelten Spannungen an der gewünschten Stelle sicherzustellen. Ein typischer Wert für Δx ist 0,1 mm.

Nach einer Koordinatentransformation von dem Kamerakoordinatensystem in das Probenkoordinatensystem wird das gewünschte Ergebnis σ(x',z') ausgegeben.

**Patentansprüche**

1. Verfahren zum Messen von Spannungen über die Dicke einer Glasscheibe nach dem Streulichtverfahren, bei dem ein seine Polarisation periodisch zwischen linear und zirkular änderndes monochromatisches Lichtstrahlenbündel schräg in die Glasscheibe eingestrahlt, und das innerhalb der Glasscheibe auf dem Weg des Lichtstrahlenbündels entstehende Streulicht mit einer Videokamera erfaßt und mit Hilfe der digitalen Bildverarbeitung Größe und Vorzeichen der Spannungen auf dem Weg des Lichtstrahlenbündels gleichzeitig ermittelt werden, **dadurch gekennzeichnet, daß** ein im Querschnitt schmales Lichtstrahlenbündel mit einer solchen Höhe verwendet wird, daß das Streulicht wenigstens entlang einer senkrecht zur Glasoberfläche verlaufenden Meßlinie (A-A) wenigstens über einen wesentlichen Teil der Dicke der Glasscheibe zur Ermittlung der Spannungen gleichzeitig erfaßt wird.

**2.** Verfahren nach Anspruch 1, **dadurch gekennzeichnet, daß** ein Lichtstrahlenbündel mit einer solchen Höhe verwendet wird, daß das Streulicht über die gesamte Dicke der Glasscheibe erfaßt wird.

**3.** Verfahren nach Anspruch 1 oder 2, **dadurch gekennzeichnet, daß** monochromatisches Licht mit einer Wellenlänge von unterhalb 500 nm verwendet wird.

**4.** Verfahren nach Anspruch 3, **dadurch gekennzeichnet, daß** als monochromatisches Licht das Licht eines Argon-Ionen-Lasers (488 nm) verwendet wird.

**5.** Vorrichtung zur Durchführung des Verfahrens nach Anspruch 1, mit einer ein linear polarisiertes monochromatisches Lichtstrahlenbündel erzeugenden Beleuchtungseinheit, einem die Polarisationsebene mit vorgegebener Rotationsgeschwindigkeit drehenden Filter, einem diesem nachgeschalteten, die Polarisation des Strahlenbündels periodisch zwischen linear und zirkular modulierenden Filter, einem das Lichtstrahlenbündel schräg in die Glasscheibe einkoppelnden Prisma, einer Videokamera und einer elektronischen Auswerteeinheit für die von der Videokamera gelieferten Signale, **dadurch gekennzeichnet, daß** zwischen der Beleuchtungseinheit (9) und dem die Polarisationsebene drehenden Filter (13) eine Einrichtung (12) zwischengeschaltet ist, die im Meßfeld innerhalb der Glasscheibe ein im Querschnitt schmales Lichtstrahlenbündel (10'), das eine im Vergleich zu seiner Breite große Höhe besitzt, erzeugt, daß bei dem gewählten Einstrahlwinkel die Glasscheibe (1) wenigstens an einer Stelle entlang einer senkrecht zur Glasoberfläche verlaufenden Meßlinie (A-A) über einen wesentlichen Teil ihrer Dicke durchstrahlt wird.

**6.** Vorrichtung nach Anspruch 5, **dadurch gekennzeichnet, daß** die das im Querschnitt schmale Lichtstrahlenbündel (10')erzeugende Einrichtung (12) aus mindestens einer Sammellinse (12') und zwei Zylinderlinsen (12'', 12''') mit senkrecht aufeinander stehenden Achsen besteht.

**Claims**

**1.** Method of measuring stresses over the thickness of a glass plate according to the scattered light method, in which a monochromatic light ray bundle that changes its polarization periodically between linear and circular is irradiated obliquely into the glass plate and, by means of a video camera, the scattered light that is incident on the path of the light ray bundle within the glass plate is detected and the magnitude and sign of the stresses on the path of the light ray bundle are simultaneously determined using digital image processing, **characterized in that** a light ray bundle that is narrow in cross section is used with a height such that the scattered light is detected simultaneously at least along a measuring line (A-A) that runs perpendicular to the surface of the glass, at least over a substantial part of the thickness of the glass plate, for the purpose of determining the stresses.

**2.** Method according to Claim 1, **characterized in that** a light ray bundle is used with a height such that the scattered light is detected over the entire thickness of the glass plate.

**3.** Method according to Claim 1 or 2, **characterized in that** monochromatic light having a wavelength of less than 500 nm is used.

**4.** Method according to Claim 3, **characterized in that** the light of an argon-ion laser (488 nm) is used as monochromatic light.

**5.** Apparatus for carrying out the method according to Claim 1, having an illumination unit that generates a monochromatic light ray bundle with linear polarization, a filter that rotates the polarization plane at a predefined rate of rotation, a filter connected downstream of the latter that modulates the polarization of the ray bundle periodically between linear and circular, a prism that couples the light ray bundle obliquely into the glass plate, a video camera and an electronic evaluation unit for the signals supplied by the video camera, **characterized in that** a device (12) is connected between the illumination unit (9) and the filter (13) that rotates the polarization plane, which device (12) generates, in the measuring field within the glass plate, a light ray bundle (10') which is narrow in cross section and which has a height that is large in comparison to its width, such that at the selected angle of incidence the glass plate (1) is irradiated over a substantial part of its thickness at at least one point along a measuring line (A-A) that runs perpendicular to the surface of the glass.

**6.** Apparatus according to Claim 5, **characterized in that** the device (12) which generates the light ray bundle (10') that is narrow in cross section consists of at least one focusing lens (12') and two cylindrical lenses (12'', 12''') having axes that are perpendicular to one another.

**Revendications**

**1.** Procédé pour mesurer des tensions sur l'épaisseur d'une vitre en verre suivant la méthode de lumière diffusée, dans lequel un faisceau de rayons lumineux monochromatique changeant sa polarisation périodiquement entre linéaire et circulaire est envoyé à l'oblique dans la vitre en verre et la lumière diffusée formée à l'intérieur de la vitre en verre sur le trajet du faisceau de rayons lumineux est saisie avec une caméra vidéo et la grandeur et le signe de polarité des tensions sont déterminés en même temps sur le trajet du faisceau de rayons lumineux à l'aide du traitement d'images numérique, **caractérisé par le fait qu'**on utilise un faisceau de rayons lumineux de section fine d'une hauteur telle que la lumière diffusée est saisie simultanément au moins le long d'une ligne de mesure (A-A) s'étendant perpendiculairement à la surface du verre au moins sur une partie essentielle de l'épaisseur de la vitre en verre pour déterminer les tensions.

2. Procédé selon la revendication 1, **caractérisé par le fait qu'**on utilise un faisceau de rayons lumineux d'une hauteur telle que la lumière diffusée est saisie sur toute l'épaisseur de la vitre en verre.

3. Procédé selon l'une des revendications 1 et 2, **caractérisé par le fait qu'**on utilise de la lumière monochromatique d'une longueur d'onde inférieure à 500 nm.

4. Procédé selon la revendication 3, **caractérisé par le fait qu'**on utilise, comme lumière monochromatique, la lumière d'un laser à ions à argon (488 nm).

5. Dispositif pour mettre en oeuvre le procédé tel que défini à la revendication 1, comprenant une unité d'éclairage produisant un faisceau de rayons lumineux monochromatique polarisé de manière linéaire, un filtre tournant le plan de polarisation à une vitesse de rotation prédéterminée, un filtre monté en aval de celui-ci, modulant la polarisation du faisceau lumineux périodiquement entre linéaire et circulaire, un prisme couplant le faisceau de rayons lumineux à l'oblique dans la vitre en verre, une caméra vidéo et une unité d'évaluation électronique pour les signaux fournis par la caméra vidéo, **caractérisé par le fait qu'**un dispositif (12), qui produit dans le champ de mesure à l'intérieur de la vitre en verre un faisceau de rayons lumineux (10') de section étroite, possédant une grande hauteur par rapport à sa largeur, est intercalé entre l'unité d'éclairage (9) et le filtre (13) tournant le plan de polarisation, de telle sorte qu'avec l'angle d'incidence choisi, la vitre en verre (1) est traversée au moins en un point le long d'une ligne de mesure (A-A) orientée perpendiculairement à la surface du verre sur une partie essentielle de son épaisseur.

6. Dispositif selon la revendication 5, **caractérisé par le fait que** le dispositif (12) produisant le faisceau de rayons lumineux (10') de section étroite comprend au moins une lentille collectrice (12') et deux lentilles cylindriques (12", 12"') avec des axes perpendiculaires l'un à l'autre.

Fig. 1

(Stand der Technik)

EP 0 878 702 B1

Fig. 2

8

Fig. 3

EP 0 878 702 B1

# *Fig. 4*

22    21    20

EINGABE : dT , n , d

DEFINIEREN : Meßbereich
                            Oberflächen

AUFNAHME : I ( t )

AUSGABE : σ ( X´ , Z´ )